# EUROPÄISCHE PATENTSCHRIFT

(11) **EP 1 968 735 B1**
(45) Veröffentlichungstag und Bekanntmachung des Hinweises auf die Patenterteilung: **11.05.2011**
(21) Anmeldenummer: 06846932.9
(22) Anmeldetag: 23.11.2006
(51) Int. Cl.: B01J 4/00, C10B 53/07, C10G 1/10, B65G 33/00

(54) **FÖRDER- UND SCHLEUSENSYSTEM**
CONVEYING AND LOCK SYSTEM
SYSTEME DE TRANSPORT ET DE SAS

(30) Priorität: 15.12.2005 DE 102005059856
(43) Veröffentlichungstag der Anmeldung: 17.09.2008
(73) Patentinhaber: Nill-Tech GmbH, 71088 Holzgerlingen (DE)
(72) Erfinder: NILL, Eberhard, 70569 Stuttgart (DE); SCHMILLEN, Anton, 71116 Gärtringen (DE)
(74) Vertreter: Kohler Schmid Möbus
(86) Internationale Anmeldenummer: PCT/DE2006/002062
(87) Internationale Veröffentlichungsnummer: WO 2007/076744

(56) Entgegenhaltungen:
- WO-A-2005/071043
- CN-A- 1 284 537
- US-A- 3 896 923
- US-A- 5 720 232

## Beschreibung

Die Erfindung betrifft ein Förder- und Schleusensystem zum Eintrag eines Schüttguts unter Gasausschluss und zur Verhinderung eines Gasaustausches bei niedrigem Differenzdruck in einen Reaktor, das ein Gehäuse und eine darin gelagerte Schneckenwelle aufweist, die angetrieben das Schüttgut von einer Eintragsöffnung zu einer Austragsöffnung im Gehäuse transportiert.

In zahlreichen Aufbereitungsprozessen von Schüttgütern ist es erwünscht oder verfahrenstechnisch zwingend notwendig, dass der Aufbereitungsprozess ohne oder zumindest weitest gehend ohne Luft betrieben werden muss, damit entweder das angestrebte Ergebnis überhaupt erreichbar ist oder der mit dem Schüttgut mittransportierte Luftanteil auf ein Minimum reduziert wird, bevor das Schüttgut die gewünschte Weiterverarbeitung erfährt. Ein Beispiel sind Prozesse, bei denen aus Abfällen von Kunststoffen hochkalorische Brennstoffe hergestellt werden. Hierbei ist es wichtig, dass die zu verarbeitenden Kunststoffteile oder Kunststoffabfälle einerseits sicher und störungsfrei auch bei einem großen Temperaturgefälle zwischen dem Innenraum eines Vorratssilos und dem Innenraum eines Reaktors transportiert werden können und andererseits sollte die in der Schüttung eingeschlossene Luft beim Transport des Schüttguts aus dem Schüttgut weitest gehend entfernt werden.

Bekannt sind in diesem Zusammenhang Doppelpendelklapppensysteme oder Zellenradschleusen, über die vorgenannte Produkte weitest gehend getrennt von der atmosphärischen Seite in einen Reaktorraum eingeschleust werden können. Das Doppelpendelklappensystem arbeitet quasi-kontinuierlich und die Zellenradschleuse kontinuierlich. Beide genannte Systeme sind teuer und erfordern eine umfangreiche Steuerungstechnik.

In der WO 2005/071043 A1 ist ein Förder- und Schleusensystem zum Eintragen eines Schüttgutes in einen Reaktor beschrieben, das ein Gehäuse und eine darin gelagerte Schneckenwelle aufweist, die angetrieben das Schüttgut von einer Eintragsöffnung zu einer Austragsöffnung im Gehäuse transportiert. Erste Windungen der Schneckenwelle weisen dabei eine größere Förderleistung von Schüttgut auf als zweite Windungen der Schneckenwelle. Derart weist die Schneckenwelle eine Verdichtungszone in deren Förderbereich zwischen der Eintrags- und der Austragszone auf, wobei die Austragszone über eine Drossel-Rückschlag-Armatur in einem unterschiedlichen Ausmaß verschließbar ist.

Aus der CN 1284537 und der US 3896923 ist jeweils ein Förder- und Schleusensystem zum Eintragen eines Schüttgutes in einen Reaktor bekannt, die ein Gehäuse und eine darin gelagerte Schneckenwelle aufweisen, wobei die Schneckenwelle in axialer Richtung einen windungsfreien Abschnitt aufweisen kann. Eine Verdichtung des Schüttgutes ist dabei nicht vorgesehen

Aufgabe der Erfindung ist es, ein Förder- und Schleusensystem bereitzustellen, das Nachteile des Stands der Technik vermeidet, insbesondere das geförderte Schüttgut entgast, soweit es aus der Atmosphäre kommend Lufteinschlüsse aufweist und die Gasphase in einem Behältnis, wie einem Reaktor, von der atmosphärischen Gasphase trennt.

Diese Aufgabe wird durch den Gegenstand des unabhängigen Anspruches gelöst.

Bei einem erfindungsgemäßen Förder- und Schleusensystem weist die Schneckenwelle in axialer Richtung zwischen der Eintrags- und Austragsöffnung einen windungsfreien Abschnitt auf, der zwischen einer Anzahl von ersten Windungen im Einzugsbereich und einer Anzahl von zweiten Windungen im Ausgangsbereich vorgesehen ist, und die ersten Windungen weisen eine gleiche oder größere Förderleistung von Schüttgut auf als die zweiten Windungen.

Das erfindungsgemäße Förder- und Schleusensystem hat den wesentlichen Vorteil, dass nicht wie bei Doppelpendelklappen oder bei entsprechenden Zellradschleusen die Schleusenkammer oder Schleusenkammern evakuiert werden müssen und dass keine besonderen Dichtungen ausgebildet werden müssen, die die Kammer zwischen zwei Pendelklappen abdichten oder jede einzelne Zellenradschleusenkammer gegen die Atmosphäre abdichten. In den bekannten Systemen wird einem zu transportierenden Schüttgut die Luft dadurch entzogen, indem man ein Vakuum in der Kammer erzeugt, die das Schüttgut aufnimmt. Bevor sich die Schleusenkammer gegenüber einem Reaktorinnenraum öffnet, muss bei den bekannten Systemen das Vakuum angelegt worden sein. Beim erfindungsgemäßen System muss ein Vakuum in der Förderschnecke nicht aufgebaut werden, weil in dem windungsfreien Abschnitt der Förderschnecke das zu transportierende Schüttgut verdichtet wird und einen Schüttgutpfropfen bildet. Bei dem Aufbau des Schüttgutpfropfens wird das im Schüttgut befindliche Gas herausgedrückt und es kann über eine Gasauslassöffnung aus dem Förder- und Schleusensystem ausströmen.

Der gewindefreie Bereich der Schneckenwelle, ein so genannter unbeschneckter Bereich, kann unterschiedlich groß und unterschiedlich lang (axiale Länge) ausgebildet sein, weil der unbeschneckte Bereich auf die Schüttguteigenschaften des zu fördernden Schüttguts angepasst werden kann. Einfachst kann der Gehäusedurchmesser des Förder- und Schleusensystems vergrößert oder verkleinert werden und die axiale Länge der gewindefreien Zone kann je nach Schüttgut verkürzt oder verlängert werden, Ebenfalls bedarf es keiner völligen Neukonstruktion des Förder- und Schleusensystems, wenn man die Förderleistung eines ersten Windungsbereichs an die Förderleistung eines zweiten Windungsbereichs anpasst. Über unterschiedliche Förderleistungen im ersten und zweiten Windungsbereichs kann man den Verdichtungsgrad des Schüttgutpfropfens im unbeschneckten Bereich der Schneckenwelle beeinflussen.

In einer vorteilhaften Ausgestaltung der Erfindung weisen die ersten und zweiten Windungen Windungsflanken auf, die unterbrechungsfrei mit der Schneckenwelle verbunden sind. Dies hat den Vorteil, dass während des Schüttguttransports im ersten wie auch im zweiten Windungsbereich die Freiräume zwischen den Windungen vollständig mit dem zu' transportierenden Schüttgut befüllt sind und die Windungsflanken stellen neben dem zu transportierenden Schüttgut selbst eine Gasbarriere zwischen der Atmosphäre und der Gasphase in einem Reaktorinnenraum dar.

Vorteilhaft ist es auch, wenn das Förder- und Schleusensystem im Einzugsbereich eine konische Verjüngung, bevorzugt einen ersten zylindrischen Abschnitt, einen konisch verjüngenden Abschnitt und einen zweiten zylindrischen Abschnitt aufweist. Dies hat den Vorteil, dass das zu fördernde Schüttgut schon im ersten Windungsbereich noch vor dem windungsfreien Abschnitt der Förderschnecke, komprimiert wird und somit eine Barriere zwischen der Atmosphäre und dem Reaktorraum bildet.

Besonders vorteilhaft ist es, wenn das Förder- und Schleusensystem eine Hohlwelle aufweist, auf die die Schneckenwelle aufgebracht ist. Ist das erfindungsgemäße Förder und Schleusensystem derart konstruktiv ausgebildet, so können einfachst Schneckenwellen im erfindungsgemäßen Förder- und Schleusensystem je nach Schüttguteigenschaften eines zu transportierenden Schüttguts ausgewechselt werden. Die konstruktive Grundausgestaltung des Förder- und Schleusensystems bleibt erhalten und es wird lediglich eine neue Schneckenwelle auf die Hohlwelle geschoben.

Ein weiterer Vorteil, wird dadurch erreicht, wenn die Hohlwelle gegenüber der Atmosphäre über eine Gleitringdichtung, insbesondere über eine doppelt wirkende Gleitringdichtung, abgedichtet ist. Mit einem derartigen Dichtungssystem wird verhindert, dass über den Antrieb der Hohlwelle Gas in den Reaktorraum, hier Luft, einströmen kann. Werden in einem Reaktor Reaktionen bzw. Stoffbearbeitungen durchgerührt, die unter Luftausschluss durchgeführt werden müssen, so gewährleistet das erfindungsgemäße Förder- und Schleusensystem mit einfachsten störungsunanfälligen konstruktiven Ausgestaltungen diese Verfahrensbedingung.

Ist das Gehäuse des Förder- und Schleusensystems in axialer Richtung gesehen mehrteilig ausgebildet, insbesondere zweiteilig, so können längs einer Hohlwelle unterschiedliche Schneckengeometrien für den ersten Windungsbereich und für den zweiten Windungsbereich eingesetzt werden. Mit dieser Maßnahme lässt sich das erfindungsgemäße Förder-, und Schleusensystem noch differenzierter an unterschiedlichste Transporteigenschaften eines Schüttguts anpassen.

Vorteilhafterweise ist im Einzugsbereich am Gehäuse eine Entgasungsöffnung vorgesehen, über die das über die Verdichtung des Schüttguts im Förderprozess innerhalb des Förder- und Schleusensystems entstehende Gas abströmen kann.

In einer weiteren Ausführungsform der Erfindung ist das Gehäuse des Förder- und Schleusensystems zumindest im Ausgangsbereich doppelwandig für den Durchfluss eines Fluids ausgebildet. Mit dieser Maßnahme kann das Förder- und Schleusensystem je nach Bedarf gekühlt, oder erwärmt werden, damit das zu fördernde Schüttgut möglichst störungsfrei, und dauerhaft aus einem Vorratssilo in einen Reaktionsraum gefördert werden kann.

Vorteilhafterweise wird die Temperatur eines Fluids, das zur Kühlung bzw. Erwärmung des Schneckengehäuses eingesetzt wird, so, gewählt, dass das Schüttgut im Fließverhalten weitest gehend unverändert aufrecht erhalten wird.

In einer weiteren vorteilhaften Ausgestaltung der Erfindung ist in der Hohlwelle eine axial verschiebbare Stange vorgesehen, die am freien Ende einen Teller aufweist, der in einer ersten Endlage die Austragsöffnung verschließt und in einer zweiten Endlage die Förderleistung der Förderschnecke uneingeschränkt freigibt. Mit dieser konstruktiven Ausgestaltung kann einerseits das aus dem Förder- und Schleusensystem austretende Schüttgut nochmals verdichtet werden, indem man einerseits den Austrittsspalt zwischen Teller und den Schneckenwindungen des zweiten Windungsbereichs verkleinert und andererseits kann über den Teller Strahlungswärme bzw. Strahlungskälte von dem zu transportierenden Schüttgut abgehalten werden. Zusätzlich kann über den Teller das Förder- und Schleusensystem komplett geschlossen werden, wenn der Spaltraum zwischen dem zweiten Windungsbereich und dem angrenzenden Teller geschlossen wird. Mit dieser Maßnahme kann die Sicherheit eines ganzen Verfahrensprozesses erhöht werden, weil im Störungsfall das Förder- und Schleusensystem vollkommen geschlossen werden kann.

In weiterer Ausgestaltung endet die Hohlwelle, in Richtung Teller in einem Faltenbalg. Über den Faltenbalg lässt sich der Teller in der Hohlwelle gasdicht verschieben und es ist gewährleistet, dass über die Tellerverschiebung keine den Verarbeitungsprozess störenden Gase in den Reaktorraum eindringen können.

Besonders vorteilhaft kann es sein, wenn im Bereich der Austragsöffnung ein Rohr beabstandet vom Gehäuse die Schneckenwelle ummantelt und in axialer Richtung das Austragsende der Schneckenwelle überragt. Diese Maßnahme ist dann vorteilhaft, wenn im Reaktorraum eine Temperatur herrscht, die sich stark von der Außentemperatur unterscheidet oder das zu fördernde Schüttgut sehr stark temperaturempfindlich ist und die Tränsporteigenschaften dadurch beeinflusst werden könnten. Überragt das Rohr die Schneckenwelle, so kann es eine zusätzliche Kühl- oder Wärmefunktion übernehmen.

Die Sicherheit des gesamten Systems wird auch dadurch erhöht, wenn an der Eintragsöffnung ein druckdichtes Absperrorgan, insbesondere ein Flachschieber, vorgesehen ist, der zwischen einem Schüttgutfördersystem und der Eintragsöffnung vorgesehen ist. Im Störungsfall kann auch an dieser Stelle das Förder- und Schleusesystem luftdicht geschlossen und unterbrochen werden.

Das die Schneckenwelle beabstandet ummantelnde Rohr kann am Austragsende der Schneckenwelle eine Verbindungswand aufweisen, die den umschlossenen Raum zwischen dem Rohr und dem Gehäuse der Schneckenwelle, verschließt. Ist dies der Fall, so kann dieser Raum mit einem besonderen Isolator versehen werden.

In einer besonderen und hier beispielhaften Verwendung wird das Förder- und Schleusensystem zum Eintrag von Kunststoffabfällen als Schüttgut in einen Reaktor zur Herstellung von hochkalorischen Brennstoffen eingesetzt und die dafür verwendete Schneckenwelle weist eine Verdichtungszone im Förderbereich der Schneckenwelle zwischen der Eintrags- und Austragszone auf. An der Austragszone ist die Schneckenwelle über einen Teller in einem unterschiedlichen Ausmaß verschließbar und die Austragszone ist von einem Rohr, das vom Gehäuse der Schneckenwelle beabstandet ist, ummantelt. Das Rohr ragt mit der Austragszone in den Reaktor hinein, wobei ausschließlich das Rohr in einen im Reaktor ausgebildeten Flüssigkeitsspiegel eintaucht. Tauscht das Rohr unter den Flüssigkeitsspiegel und ist die Förderzone der Schneckenwelle im zweiten Windungsbereich von dem Flüssigkeitsspiegel beabstandet, so wirkt das Rohr, das die Austragszone ummantelt, als Schutzschild und Strahlungswärme aus dem Reaktionsprozess der Reaktors kann abgeschirmt werden und somit nur beschränkt in das Förder- und Schleusensystem eindringen. Mit dieser Maßnahme kann verhindert werden, dass die Kunststoffabfälle schon im Eintragsbereich in den Reaktor so stark anschmelzen, dass sie das Fördersystem blockieren, d.h. stören können. Mit dieser Maßnahme ist ein störungsfreier Einschleusprozess der Kunststoffabfälle in einen Reaktor dauerhaft gewährleistet. Die Kunststoffabfälle werden von Raumtemperatur werden von Raumtemperatur ausgehend in einen Reaktor transportiert, der Prozesstemperaturen zwischen 200° und 500° aufweisen kann. Die Kunststoffabfälle werden über das Förder- und Schleusensystem in den Reaktor eingebracht und die dabei transportierten Kunststoffabfälle werden nicht über den Schmelzpunkt der einzeinen Kunststoffe hinaus erwärmt. Damit ist ein reproduzierbares und störungsfreies Förderverhaiten der Kunststoffabfälle in dem Förder- und Schleusensystem gewährleistet.

Beispielhaft wird das Förder- und Schieusensystem in den nachfolgenden Figuren weiter beschrieben.

Es zeigt:
- **Fig. 1**: einen stark schematisierten Aufbau eines erfindungsge- mäßen Förder- und Schleusensystems in einen Reaktor; und
- **Fig. 2**: ein erfindungsgemäßes Förder- und Schleusensystem im Schnitt in einer detaillierteren Darstellung gegenüber dem Förder- und Schleusensystem der Fig. 1.

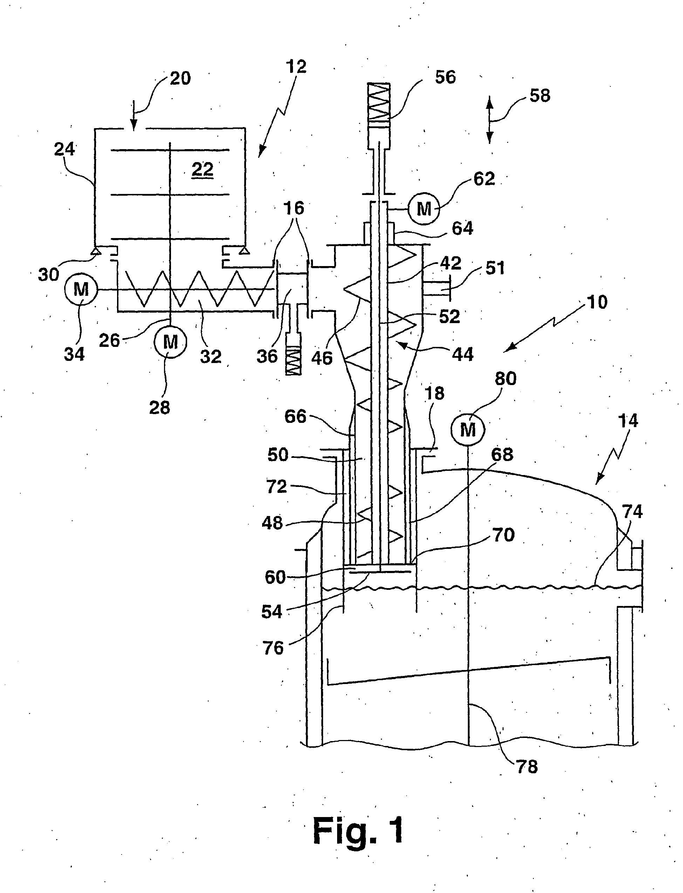

**Fig. 1** zeigt mit 10 ein Förder- und Schleusensystem, das zwischen einem Beschickungssystem 12 und einem Reaktor 14 eingebunden ist. Über Flanschverbindungen 16, 18 ist das Förder- und Schleusensystem 10 sowohl am Beschickungssystem 12 wie auch am Reaktor 14 dauerhaft befestigt.

In Pfeilrichtung 20 werden Kunststoffpartikel bzw. Kunststoffabfälle als Schüttgut in einen Innenraum 22 eines Bevorratungsbehälters 24 gebracht. Im Bevorratungsbehälter 24 wird über ein Rührwerk 26 das Schüttgut in Bewegung gehalten und Brückenbildungen der im Bevorratungsbehälter 24 befindlichen Schüttgutpartikel bzw. Kunststoffschnitzel werden verhindert. Das Rührwerk 26 wird über einen Motor 28 angetrieben. Am Bevorratungsbehälter 24 ist eine Wägeeinrichtung 30 vorgesehen, mit der die kontinuierliche Beschickung des Reaktors 14 überwacht wird. Über die Wägeeinrichtung 30 lässt sich die Förderleistung einer Übergabeschnecke 32 festlegen, die über einen Motor 34 angetrieben wird. Das im Bevorratungsbehälter 24 befindliche Schüttgut wird über die Übergabeschnecke 32 dem Förder- und Schleusensystem 10 zugeführt. Zwischen der Übergabeschnecke 32 und dem Förder- und Schleusensystem 10 ist ein Absperrorgan 36, hier ein Flachschieber, vorgesehen, mit dem der Transportfluss des Schüttguts aus dem Bevorratungsbehälter 24 zu dem Förder- und Schleusensystem 10 unterbrochen werden kann.

An die Übergabeschnecke 32 ist das Förder- und Schleusensystem 10 angeflanscht. Das Förder- und Schleusensystem 10 weist ein Gehäuse 40 auf, in dem eine Hohlwelle 42 gelagert ist. Die Hohlwelle 42 ist mit einer Schneckenwelle 44 bestückt, die erste Windungen 46 (erster Windeabschnitt) und zweite Windungen 48 (zweiter Windungsabschnitt) aufweist., Zwischen den ersten Windungen 46 und den zweiten Windungen 48 ist ein windungsfreier Abschnitt 50 (unbeschneckter Bereich) vorgesehen.

Wird nun über die Übergabeschnecke 32 ein Schüttgut, hier Kunststoffpartikel bzw. Kunststoffschnitzel, in das Förder- und Schleusen-system 10 transportiert, so wird dieses Schüttgut über die ersten Windungen 46 in den windungsfreien Abschnitt 50 transportiert. Die ersten Windungen 46 weisen Gewindeflanken auf, die von der Schneckenwelle 44 ausgehend bis nahe an das Gehäuse 40 ragen. Die ersten Windungen 46 transportieren das Schüttgut in den windungsfreien Abschnitt 50 und dort wird das Schüttgut verdichtet, bis der gesamte Raum des windungsfreien Abschnitts 50 mit verdichteten Schüttgutpartikeln ausgefüllt ist. Dabei bildet sich ein Schüttgutpfropfen aus. Bei dieser Verdichtung wird das zwischen den Partikeln befindliche Gas verdrängt, das über eine Entgasungsöffnung 51 aus dem Förder- und Schleusensystem 10 ausströmen kann. Ist der windungsfreie Abschnitt 50 vollkommen mit Schüttgutpartikein gefüllt, so werden diese Schüttgutpartikel über die zweiten Windungen 48 in den Reaktor 14 transportiert.

Die Schneckenwelle 44 ist drehfest auf die Hohlwelle 42 aufgeschoben und kann je nach Bedarf ausgewechselt werden.

In der Hohlwelle 42 ist eine Stange 52 angeordnet, die an ihrem freien Ende zum Reaktor 14 hin einen Teller 54 aufweist. Über einen Verstellmechanismus 56 kann die Stange 52 und damit auch der Teller 54 in Pfeilrichtungen 58 verschoben werden. Zwischen dem freien Ende des Gehäuses 40 und dem Teller 54 ist ein Spalt 60 ausgebildet, dessen Spaltöffnung über die Verschiebung der Stange 52 eingestellt werden kann. Der Spalt 60 kann über den Teller 54 vollkommen geschlossen werden bzw. so weit geöffnet werden, dass die Produktförderleistung der zweiten Windungen 48 in den Reaktor 14 nicht beeinflusst wird.

Die Hohlwelle 42 wird über einen Motor 62 angetrieben und ist über eine doppelwirkende Gleitringdichtung 64 abgedichtet, so dass über die Drehverbindungen am Förder- und Schleusensystem 10 kein Gas in den Reaktorraum des Reaktors 14 eindringen kann.

Zumindest am Austragsende des Förder- und Schleusensystems 10 ist eine Ummantelung 66 am Gehäuse 40 vorgesehen, über die das Gehäuse 40 und damit die Schneckenwelle 44 mittels eines Fluids gekühlt oder erwärmt werden kann. Beabstandet von der Ummantelung 66 ist am Austragsende des Förder- und schleusensystems 10 ein Rohr 68 befestigt, das das freie Ende der Hohlwelle 42 und den Teller 54 so weit überragt, dass es in axialer Richtung des Förder- und Schleusehsystems 10 weiter in den Reaktor 14 hineinragt als der Teller 54. Das Rohr 68 weist eine Verbindungswand 70 zwischen der Ummantelung 66 und der Innenwänd des Rohrs 68 auf, so dass zwischen der Ummantelung 66 und dem Rohr 68 ein umschlossener Raum 72 ausgebildet ist. Der umschlossene Raum 72 kann je nach Bedarf mit isolierendem Material oder einem Kühl- bzw. Erwärmungsmedium gefüllt werden.

Das Rohr 68 überragt in axialer Richtung gesehen die Schneckenwelle 44 und taucht in einen Flüssigkeitsspiegel 74 mit seinem freien Ende 76 ein. Das Rohr 68 kann Strahlungswärme vom einzutragenden Schüttgut fernhalten.

Der Reaktor 14 weist ein Rührwerk 78 auf, das über einen Motor 80 angetrieben ist. Mit den am Förder- und Schteusensystem 10 vorgesehenen konstruktiven Maßnahme können Schüttgüter aus der Atmosphäre unter Verhinderung eines Gasaustausches in einen Reaktor eingeschleust werden und die Produkttemperatur des Schüttguts kann über die vorgesehenen Kühl- bzw. Erwärmungselemente am Förder- und Schleusensystem 10 kontrolliert, eingestellt, werden, so dass über die Transpörttemperatur eines Schüttguts im Förder- und Schleusensystem 10 die Fördereigenschaften des zu transportierenden Schüttguts beeinflusst oder konstant gehalten werden können.

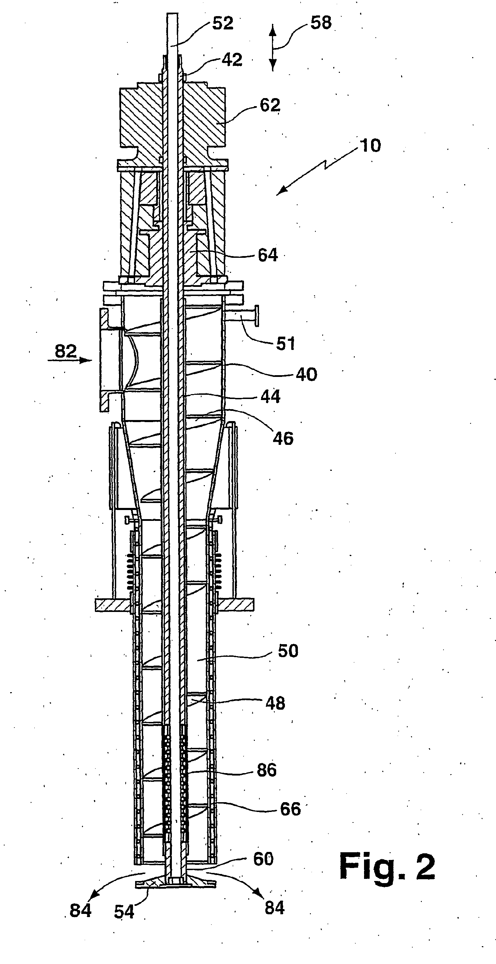

**Fig. 2** zeigt detaillierter das Förder- und Schleusensystem 10 in einem Schnitt. Die im Gehäuse 40 angeordnete Hohlwelle 42 wird über den Motor 62 angetrieben. Auf der Hohlwelle 42 ist eine Schneckenwelle 44 angeordnet, die je nach Bedarf ausgewechselt werden kann. Die Schneckenwelle 44 weist erste Windungen 46 und zweite Windungen 48 auf. Zwischen den ersten Windungen 46 und den zweiten Windungen 48 ist ein wjndungsfreier Abschnitt 50 vorgesehen. Am Gehäuse 40 ist eine Entgasungsöffnung 51 ausgebildet, über die Gase aus dem Gehäuse 40 bei Bedarf ausströmen können.

In der Hohlwelle 42 ist eine Stange 52 angeordnet, die den Teller 54 hält. Die Stange 52 ist über nicht in der Figur dargestellte Mittel in Pfeilrichtungen 58 verschiebbar. Die Hohlwelle 42 ist über eine Gleitringdichtung, hier eine doppelwirkende Gleitringdichtung, 64, abgedichtet. Der Spalt 60 zwischen dem freien Ende des Gehäuses 40 und dem Teller 54 kann über eiw Verschieben der Stange 52 eingestellt werden. Der Teller 54 lässt sich spaltfrei bis an das Gehäuse 40 verfahren, so dass der Spalt 60 bei Bedarf vollkommen geschlossen werden kann. In einer anderen Einstellung des Spalts 60 kann die Spaltweite so weit geöffnet werde, dass der Teller 54 den Schüttguttransport durch das Förder- und Schleusensystem 10 nicht beeinflusst.

Schüttgutpartikel werden in Pfeilrichtung 82 in das Förder- und Schleusensystem 10 transportiert und werden über die ersten Windungen 46 dem windungsfreien Abschnitt 50 zugeführt. Im windungsfreien Abschnitt 50 werden die Schüttgutpartikel verdichtet und gleichzeitig entgast. Das frei werdende Gas kann über die Entgasungsöffnung 51 aus dem Gehäuse 40 strömen. Im windungsfreien Abschnitt 50 bildet sich ein Produktpfropfen, der dann über die zweiten Windungen 48 teilweise abgebaut wird, wenn der Raum im windungsfreien Abschnitt 50 vollkommen mit verdichteten Schüttgutpartikeln ausgefüllt ist. In Pfeilrichtungen 84 können die Schüttgutpartikel durch den Spalt 60 in einen in der Figur 2 nicht gezeigten Reaktor strömen.

Der Teller 54 ist über einen Faltenbalg 86 an der Hohlwelle 42 befestigt, so dass der Teller 54 gasdicht in Pfeilrichtungen 58 über die Stange 52 verschoben werden kann.

Ein Förder- und Schleusensystem 10 zum Eintrag eines Schüttguts unter Gasausschluss und zur Verhinderung eines Gasaustausches bei niedrigem Differenzdruck in einen Reaktor 14 weist eine Schneckenwelle 44 auf, an der erste Windungen 46 und zweite Windungen 48 ausgebildet sind. Zwischen den ersten und zweiten Windungen 46, 48 ist ein windungsfreier Abschnitt 50 ausgebildet, in dem das geförderte Schüttgut verdichtet wird. Durch die Verdichtung entsteht ein Schüttgutpfropfen, der weitest gehend gasfrei ist und während des Schüttguttransports über die Schneckenwelle 44 ist ständig ein Schüttgutpfropfen im Förder- und Schleusensystem 10 ausgebildet; der einen Gasaustausch zwischen dem Produkteintrag und dem Produktaustrag aus dem Förder- und Schleusensystem 10 verhindert.

## Patentansprüche

1. Förder- und Schleusensystem zum Eintrag eines Schüttguts unter Gasausschluss und zur Verhinderung eines Gasaustausches bei niedrigem Differenzdruck in einen Reaktor (14), das ein Gehäuse (40) und eine darin gelagerte Schneckenwelle (44) aufweist, die angetrieben das Schüttgut von einer Eintragsöffnung zu einer Austragsöffnung im Gehäuse (40) transportiert, wobei
die Schneckenwelle (44) in axialer Richtung zwischen der Eintrags- und Austragsöffnung einen windungsfreien Abschnitt (50) aufweist, der zwischen einer Anzahl von ersten Windungen (46) im Einzugsbereich und einer Anzahl von zweiten Windungen (48) im Ausgangsbereich vorgesehen ist,
und wobei die ersten Windungen (46) eine gleiche oder größere Förderleistung von Schüttgut als die zweiten Windungen (48) aufweisen, derart dass die Schneckenwelle (44) eine Verdichtungszone im Förderbereich der Schneckenwelle (44) zwischen der Eintrags- und Austragszone aufweist.

2. Förder- und Schleusensystem zum Eintrag eines Schüttguts nach Anspruch 1,
**dadurch gekennzeichnet,**
**dass** die ersten und zweiten Windungen (46, 48) Windungsflanken aufweisen, die unterbrechungsfrei mit der Schneckenwelle (44) verbunden sind.

3. Förder- und Schleusensystem zum Eintrag eines Schüttguts nach Anspruch 1 oder 2,
**dadurch gekennzeichnet,**
**dass** das Förder- und Schleusensystem (10) im Produkteinzugsbereich eine konische Verjüngung, bevorzugt einen ersten zylindrischen Abschnitt, einen konisch verjüngenden Abschnitt und einen zweiten zylindrischen Abschnitt aufweist.

4. Förder- und Schleusensystem zum Eintrag eines Schüttguts nach 1 bis 3,
**dadurch gekennzeichnet,**
**dass** das Förder- und Schleusensystem (10) eine Hohlwelle (42) aufweist, auf die die Schneckenwelle (44) aufgebracht ist.

5. Förder- und Schleusensystem zum Eintrag eines Schüttguts nach Anspruch 4,
**dadurch gekennzeichnet,**
**dass** die Hohlwelle (42) gegenüber der Atmosphäre über eine Gleitringdichtung, insbesondere über eine doppelwirkende Gleitringdichtung (64), abgedichtet ist.

6. Förder- und Schleusensystem zum Eintrag eines Schüttguts nach Anspruch 1 bis 5,
**dadurch gekennzeichnet,**
**dass** das Gehäuse (40) in axialer Richtung mehrteilig, insbesondere zweiteilig ausgebildet ist.

7. Förder- und Schleusensystem zum Eintrag eines Schüttguts nach Anspruch 1 bis 6,
**dadurch gekennzeichnet,**
**dass** im Einzugsbereich am Gehäuse (40) eine Entgasungsöffnung (51) vorgesehen ist.

8. Förder- und Schleusensystem zum Eintrag eines Schüttguts nach Anspruch 1 bis 7,
**dadurch gekennzeichnet,**
**dass** das Gehäuse (40) zumindest im Ausgangsbereich doppelwandig für den Durchfluss eines Fluids ausgebildet ist.

9. Förder- und Schleusensystem zum Eintrag eines Schüttguts nach Anspruch 8,
**dadurch gekennzeichnet,**
**dass** das Fluid eine Temperatur aufweist, die das im Förder- und Schleusensystem transportierte Schüttgut im Fließverhalten weitest gehend unverändert aufrecht erhält.

10. Förder- und Schleusensystem zum Eintrag eines Schüttguts nach Anspruch 1 bis 4,
**dadurch gekennzeichnet,**
**dass** in der Hohlwelle (42) eine axial verschiebbare Stange (52) vorgesehen ist, die am freien Ende einen Teller (54) aufweist, der in einer ersten Endlage die Austragsöffnung verschließt und in einer zweiten Endlage die Förderleistung der Schneckenwelle (44) uneingeschränkt freigibt.

11. Förder- und Schleusensystem zum Eintrag eines Schüttguts nach Anspruch 10,
**dadurch gekennzeichnet,**
**dass** die Hohlwelle (42) in Richtung Teller in einem Faltenbalg (86) endet.

12. Förder- und Schleusensystem zum Eintrag eines Schüttguts nach Anspruch 1 bis 11,
**dadurch gekennzeichnet,**
**dass** im Bereich der Austragsöffnung ein Rohr (68) beabstandet vom Gehäuse (40) die Schneckenwelle (44) ummantelt und in axialer Richtung das Austragsende der Schneckenwelle (44) überragt.

13. Förder- und Schleusensystem zum Eintrag eines Schüttguts nach Anspruch 1 bis 12,
**dadurch gekennzeichnet,**
**dass** an der Eintragsöffnung ein druckdichtes Absperrorgan, insbesondere ein Flachschieber (36), vorgesehen ist, der zwischen einem Schüttgutfördersystem und der Eintragsöffnung vorgesehen ist.

14. Förder- und Schleusensystem zum Eintrag eines Schüttguts nach Anspruch 11 oder 13,
**dadurch gekennzeichnet,**
**dass** das Rohr (68) am Austragsende der Schneckenwelle (44) eine Verbindungswand (70) aufweist, die den umschlossenen Raum (72) zwischen dem Rohr (68) und dem Gehäuse (40) der Schneckenwelle (44) verschließt.

15. Förder- und Schleusensystem nach Anspruch 1 zum Eintrag von Kunststoffabfällen als Schüttgut in den Reaktor (14) zur Herstellung von hochkalorischen Brennstoffen über die Schneckenwelle (44),
**dadurch gekennzeichnet,**
**dass** die Austragszone von einem Rohr (68), das vom Gehäuse (40) der Schneckenwelle (44) beabstandet ist, ummantelt ist, und das Rohr (68) mit der Austragszone in den Reaktor (14) hineinragt, wobei ausschließlich das Rohr (68) in einen im Reaktor (14) ausgebildeten Flüssigkeitsspiegel eintaucht, wobei die Austragszone der Schneckenwelle (44) über einen Teller (54) in einem unterschiedlichen Ausmaß verschließbar ist.

## Claims

1. Conveying and lock system for the introduction of a bulk product into a reactor (14) while blocking gas and preventing gas exchange at low differential pressures, having a housing (40) and a screw shaft (44) disposed therein and driven to transport the bulk product from an inlet opening to an outlet opening within a housing (40), wherein the screw shaft (44) has a winding-free section (50) which is disposed in an axial direction between the inlet and the outlet openings between a plurality of first windings (46) in the inlet region and a plurality of second windings (48) in the outlet region, and wherein the first windings (46) have a transport capacity of bulk product which is equal to or in excess of that of the second windings (48), such that the screw shaft (44) has a compression zone in the transport region of the screw shaft (44) between the inlet and outlet regions.

2. Conveying and lock system for introducing a bulk product according to claim 1, **characterized in that** the first and the second windings (46, 48) have winding flanks which are connected, without interruption, to the screw shaft (44).

3. Conveying and lock system for introduction of a bulk product according to claim 1 or 2, **characterized in that** the conveying and lock system (10) has a conical tapering in the product inlet region, preferentially a first cylindrical section, a conical tapered section, and a second cylindrical section.

4. Conveying and lock system for introduction of a bulk product according to claims 1 through 3, **characterized in that** the conveying and lock system (10) has a hollow shaft (42) on which the screw shaft (44) is disposed.

5. Conveying and lock system for introduction of a bulk product according to claim 4, **characterized in that** the hollow shaft (42) is sealed with respect to atmosphere by means of a sliding ring seal, in particular a double action sliding ring seal (64).

6. Conveying and lock system for introduction of a bulk product according to claims 1 through 5, **characterized in that** the housing (40) is subdivided in the axial direction a plurality of times, in particular into two parts.

7. Conveying and lock system for introduction of a bulk product according to claims 1 through 6, **characterized in that** a vent opening (51) is provided in the introduction region on the housing (40).

8. Conveying and lock system for introduction of a bulk product according to claims 1 through 7, **characterized in that** the housing (40) has a double wall structure for the passage of a fluid, at least in the outlet region.

9. Conveying and lock system for introduction of a bulk product according to claim 8, **characterized in that** the fluid has a temperature which maintains the flow behavior of the bulk product transported in the conveying and lock system to a substantially unchanged degree.

10. Conveying and lock system for introduction of a bulk product according to claims 1 through 4, **characterized in that** a hollow shaft (42) has an axially displaceable rod (52) which has a plate (54) at a free end thereof which, in a first end position, closes the outlet opening and in a second end position frees the transport capacity of the screw shaft (44) in a completely unthrottled fashion.

11. Conveying and lock system for introduction of a bulk product according to claim 10, **characterized in that** the hollow shaft (42) ends in a bellows (86) in the direction of the plate.

12. Conveying and lock system for introduction of a bulk product according to claims 1 through 11, **characterized in that** a tube (68) surrounds the screw shaft (44) in a region of the outlet opening at a separation from the housing (40) and projects in an axial direction past the outlet end of the screw shaft (44).

13. Conveying and lock system for introduction of a bulk product according to claims 1 through 12, **characterized in that** the inlet opening has a pressure-tight shut-off device, in particular a gate valve (36), which is disposed between a bulk material delivery system and the inlet opening.

14. Conveying and lock system for introduction of a bulk product according to claim 11 or 13, **characterized in that** the tube (68) has a connecting wall (70) at the output end of the screw shaft (44) which closes the surrounded region (72) between the tube (68) and the housing (40) of the screw shaft (44).

15. Conveying and lock system according to claim 1 for introduction of plastic waste as bulk product into the reactor (14) via the screw shaft (44) for the production of high energy fuels,
**characterized in that** the outlet region is surrounded by a tube (68) which is spaced apart from the housing (40) of the screw shaft (44) and the tube (68) and the outlet region project into the reactor (14), wherein only the tube (68) dips into a liquid surface formed within the reactor (14), wherein the outlet region of the screw shaft (44) can be closed to differing degrees by means of a plate (54).

## Revendications

1. Système de convoyage à effet de sas pour l'introduction d'une matière en vrac, dans un réacteur (14), avec exclusion de gaz et en vue d'empêcher un échange gazeux sous faible pression différentielle, comprenant un carter (40) et un arbre (44) à vis sans fin qui est monté dans ledit carter et achemine, à l'état entraîné, la matière en vrac depuis un orifice d'introduction jusqu'à un orifice de décharge pratiqués dans ledit carter (40), sachant que
l'arbre (44) à vis sans fin est axialement muni, entre l'orifice d'introduction et l'orifice de décharge, d'un tronçon (50) dépourvu de spires qui est prévu entre un certain nombre de premières spires (46), dans la zone de pénétration, et un certain nombre de secondes spires (48) dans la zone de sortie,
et sachant que lesdites premières spires (46) offrent une capacité de convoyage de matière en vrac égale ou supérieure à celle desdites secondes spires (48), de telle sorte que l'arbre (44) à vis sans fin présente une zone de densification dans la région de convoyage dudit arbre (44) à vis sans fin, entre ladite zone de pénétration et ladite zone de sortie.

2. Système de convoyage à effet de sas pour l'introduction d'une matière en vrac, selon la revendication 1,
**caractérisé par le fait**
**que** les premières et secondes spires (46, 48) présentent des flancs qui sont reliés à l'arbre (44) à vis sans fin avec absence de discontinuités.

3. Système de convoyage à effet de sas pour l'introduction d'une matière en vrac, selon la revendication 1 ou 2,
**caractérisé par le fait**
**que**, dans la zone de pénétration du produit, ledit système (10) de convoyage à effet de sas présente un rétrécissement tronconique, de préférence un premier segment cylindrique, un segment à amenuisement tronconique, et un second segment cylindrique.

4. Système de convoyage à effet de sas pour l'introduction d'une matière en vrac, selon les revendications 1 à 3,
**caractérisé par le fait**
**que** ledit système (10) de convoyage à effet de sas comporte un arbre creux (42), sur lequel l'arbre (44) à vis sans fin est installé.

5. Système de convoyage à effet de sas pour l'introduction d'une matière en vrac, selon la revendication 4,
**caractérisé par le fait**
**que** l'étanchéité de l'arbre creux (42), vis-à-vis de l'atmosphère, est assurée par une garniture d'étanchement à anneau glissant, de préférence par une garniture d'étanchement à anneau glissant (64) à double action.

6. Système de convoyage à effet de sas pour l'introduction d'une matière en vrac, selon les revendications 1 à 5,
**caractérisé par le fait**
**que** le carter (40) est réalisé en plusieurs parties, notamment en deux parties dans le sens axial.

7. Système de convoyage à effet de sas pour l'introduction d'une matière en vrac, selon les revendications 1 à 6,
**caractérisé par le fait**
**qu'**un orifice de dégazage (51) est prévu sur le carter (40), dans la zone de pénétration.

8. Système de convoyage à effet de sas pour l'introduction d'une matière en vrac, selon les revendications 1 à 7,
**caractérisé par le fait**
**que** le carter (40) est de réalisation à double paroi, au moins dans la zone de sortie, en vue de l'écoulement d'un fluide.

9. Système de convoyage à effet de sas pour l'introduction d'une matière en vrac, selon la revendication 8,
**caractérisé par le fait**
**que** le fluide présente une température par laquelle l'allure coulante de la matière en vrac, acheminée dans ledit système de convoyage à effet de sas, est maintenue le plus possible inchangée.

10. Système de convoyage à effet de sas pour l'introduction d'une matière en vrac, selon les revendications 1 à 4,
**caractérisé par le fait**
**que** l'arbre creux (42) renferme une tige (52) pouvant coulisser dans le sens axial et pourvue, à l'extrémité libre, d'un disque (54) qui obture l'orifice de décharge dans une première position extrême et autorise sans restriction, dans une seconde position extrême, la capacité de convoyage de l'arbre (44) à vis sans fin.

11. Système de convoyage à effet de sas pour l'introduction d'une matière en vrac, selon la revendication 10,
**caractérisé par le fait**
**que** l'arbre creux (42) s'achève par un soufflet (86) en direction du disque.

12. Système de convoyage à effet de sas pour l'introduction d'une matière en vrac, selon les revendications 1 à 11,
**caractérisé par le fait**
**qu'**une tubulure (68) entoure l'arbre (44) à vis sans fin dans la région de l'orifice de décharge, à distance du carter (40), et fait axialement saillie au-delà de l'extrémité de décharge dudit arbre (44) à vis sans fin.

13. Système de convoyage à effet de sas pour l'introduction d'une matière en vrac, selon les revendications 1 à 12,
**caractérisé par**
la présence, sur l'orifice d'introduction, d'un organe d'isolement étanche à la pression et se présentant, en particulier, comme un tiroir aplati (36) prévu entre ledit orifice d'introduction et un système de convoyage de matière en vrac.

14. Système de convoyage à effet de sas pour l'introduction d'une matière en vrac, selon la revendication 11 ou 13,
**caractérisé par le fait**
**que** la tubulure (68) comporte, à l'extrémité de décharge de l'arbre (44) à vis sans fin, une paroi de liaison (70) qui obture l'espace (72) confiné entre ladite tubulure (68) et le carter (40) dudit arbre (44) à vis sans fin.

15. Système de convoyage à effet de sas selon la revendication 1, destiné à introduire dans le réacteur (14) par l'intermédiaire de l'arbre (44) à vis sans fin, en tant que matière en vrac, des déchets de matière plastique en vue de produire des combustibles à pouvoir calorifique élevé,
**caractérisé par le fait**
**que** la zone de décharge est entourée d'une tubulure (68) située à distance du carter (40) de l'arbre (44) à vis sans fin, et ladite tubulure (68) s'engage dans le réacteur (14) avec ladite zone de décharge, sachant qu'exclusivement ladite tubulure (68) plonge dans un niveau de liquide ménagé dans ledit réacteur (14), la zone de décharge dudit arbre (44) à vis sans fin pouvant être obturée avec ampleur différente, par l'intermédiaire d'un disque (54).
